# FASCICULE DE BREVET EUROPEEN

(11) **EP 2 812 935 B1**
(45) Date de publication et mention de la délivrance du brevet: **01.11.2017**
(21) Numéro de dépôt: 13702816.3
(22) Date de dépôt: 07.02.2013
(51) Int. Cl.: H01M 2/02, H01G 2/10, H01G 9/10, H01G 9/08, H01G 9/00, H01G 11/78, H01G 11/80, H01G 11/84, H01G 13/00, H01M 2/04

(54) **PROCEDE DE FABRICATION D'UN ENSEMBLE DE STOCKAGE D'ENERGIE ELECTRIQUE**
VERFAHREN ZUR HERSTELLUNG EINER ANORDNUNG FÜR DIE SPEICHERUNG ELEKTRISCHER ENERGIE
PROCESS OF MANUFACTURE OF AN ASSEMBLY FOR THE STORAGE OF ELECTRICAL ENERGY

(30) Priorité: 07.02.2012 FR 1251138
(43) Date de publication de la demande: 17.12.2014
(73) Titulaire: Blue Solutions, 29500 Ergué Gabéric (FR)
(72) Inventeur: VIGNERAS, Erwan, 29000 Quimper (FR)
(74) Mandataire: Regimbeau
(86) Numéro de dépôt international: PCT/EP2013/052443
(87) Numéro de publication internationale: WO 2013/117651

(56) Documents cités:
- JP-A- 59 175 553
- US-A- 5 798 906

## Description

### DOMAINE TECHNIQUE

La présente invention concerne le domaine technique des ensembles de stockage d'énergie électrique.

Plus particulièrement, la présente invention concerne un dispositif et un procédé pour la fabrication de tels ensembles de stockages, ainsi qu'un ensemble de stockage ainsi obtenu.

On entend, dans le cadre de la présente invention, par « ensemble de stockage d'énergie électrique », soit un condensateur (i.e. un système passif comprenant deux électrodes et un isolant), soit un supercondensateur (i.e. un système passif comprenant au moins deux électrodes, un électrolyte et au moins un séparateur), soit une batterie (i.e. un système comprenant une anode, une cathode et une solution d'électrolyte entre l'anode et la cathode), par exemple de type batterie au lithium.

### ETAT DE LA TECHNIQUE

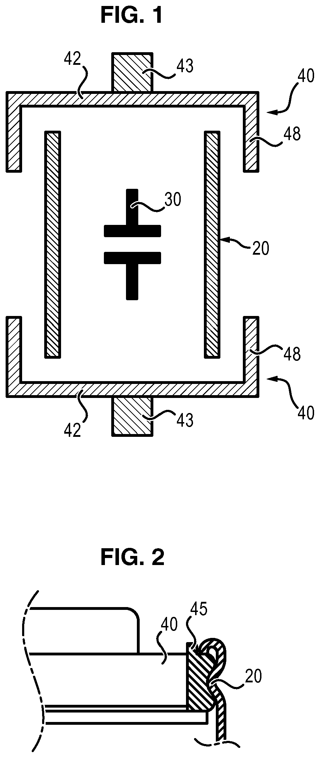

On a illustré à la figure 1 un exemple d'ensemble de stockage d'énergie du type supercondensateur tubulaire.

Cet ensemble de stockage d'énergie 10 comprend les éléments suivants :
- une enveloppe tubulaire 20 ouverte à ses deux extrémités,
- un élément bobiné 30 tel qu'un enroulement capacitif imprégné d'un électrolyte liquide, ainsi que
- deux couvercles 40 destinés à coiffer les extrémités ouvertes de l'enveloppe tubulaire 20.

On connaît différents procédés de fabrication d'un tel ensemble de stockage. Ces différents procédés comprennent chacun une étape consistant à fermer l'enveloppe tubulaire avec un couvercle. Cette étape de fermeture peut être basée sur trois techniques :
- le sertissage mécanique
- le soudage étanche, ou
- le collage.

### Sertissage mécanique

Le document EP 2 104 122 décrit une étape de sertissage mécanique ou bouterollage consistant à déformer l'enveloppe tubulaire 20 pour la plier contre le couvercle 40. Une pièce d'étanchéité de type élastomère - telle qu'un joint 45 - est alors comprimée pour assurer l'étanchéité au liquide et au gaz.

Un inconvénient de la technique de sertissage concerne la nécessité d'utiliser une pièce d'étanchéité de type élastomère. En effet, les risques de fuite sont liés à la compression de cette pièce d'étanchéité qui est difficile à maitriser, les contraintes générées lors du sertissage sur cette pièce d'étanchéité pouvant alors être non uniformément réparties.

Un autre inconvénient concerne la durée de l'opération de sertissage. En effet, l'outil utilisé pour réaliser le sertissage doit contourner l'enveloppe tubulaire, ce qui augmente la durée de l'étape de fermeture. En variante, il est possible d'utiliser un outil permettant d'appliquer simultanément une pression de contact sur toute la circonférence de l'ensemble de stockage afin de sertir l'enveloppe tubulaire et le couvercle. Toutefois, dans ce cas, il est nécessaire de disposer d'un outil différent pour chaque diamètre d'enveloppe tubulaire et de couvercle, ce qui nécessite de coûteux investissements.

Un autre inconvénient encore concerne la durée de vie limitée des ensembles de stockage fabriqués en mettant en oeuvre une étape de sertissage mécanique. Au cours du vieillissement de l'ensemble de stockage la pression interne de l'ensemble de stockage augmente. Cette augmentation de pression peut induire une ouverture du sertissage, ce qui réduit considérablement la durée de vie de l'ensemble de stockage.

Enfin, l'opération de sertissage peut engendrer des contraintes sur l'élément bobiné 30, dégradant les performances initiales de l'ensemble de stockage ainsi obtenu.

### Soudage étanche

La soudure peut être réalisée au TIG (acronyme de l'expression anglo-saxonne « *Tungsten Inert Gas »*)*,* au laser, ou par d'autres techniques classiques de soudage. Dans le cas de la soudure, la pièce d'étanchéité de type élastomère entre l'enveloppe tubulaire et le couvercle n'est plus nécessaire, ce qui augmente la durée de vie de l'ensemble de stockage.

Toutefois, le soudage étanche présente de nombreux inconvénients.

L'étape de soudure induit en effet un échauffement de l'enveloppe tubulaire, qui peut brûler les isolants thermoplastiques, les séparateurs ou les films de frettage constituant l'élément bobiné 30. De plus, il n'est pas possible de faire l'imprégnation de l'élément bobiné 30 avant la soudure car l'électrolyte est inflammable.

La mise en oeuvre de l'étape de soudure impose également la mise en oeuvre d'étapes de préparation des surfaces à souder - telles qu'un nettoyage, un décapage et un séchage de l'enveloppe tubulaire et/ou du couvercle - pour garantir un niveau étanchéité suffisant. Cette opération est coûteuse car difficile à réaliser.

De plus, dans le cas de soudure par faisceau laser ou TIG, il est nécessaire de contourner l'enveloppe tubulaire pour la souder sur toute sa circonférence, ce qui augmente la durée de l'étape de fermeture.

Enfin, la mise en oeuvre d'une étape de soudure implique des coûts de fabrication élevés (gaz consommable, métal d'apport, ...).

### Collage

Lors d'une étape de collage, l'assemblage du couvercle sur l'enveloppe tubulaire est réalisé en utilisant une colle, généralement époxy, parfois chargé de métal.

Les techniques d'assemblage basées sur une étape de collage sont onéreuses pour les raisons suivantes. D'une part, l'étape de collage impose la mise en oeuvre préalable d'étapes de préparation des surfaces à coller - telles que le dégraissage et le séchage - pour garantir des niveaux d'étanchéité et de tenue mécanique suffisants. Une étape préalable d'abrasion peut également être mise en oeuvre pour rendre rugueuses les surfaces à coller afin d'améliorer l'adhérence et la tenue au collage. Ces étapes préalables sont couteuses car difficiles à réaliser.

D'autre part, la colle qui a une fonction de fixation, a également une fonction d'isolant électrique. Le volume de colle déposé est en conséquence relativement important, et la tenue au cisaillement est moins bonne (un cordon de colle fin est plus résistant qu'un cordon de colle épais). Pour compenser ce défaut, il est fréquent d'utiliser des colles spécifiques très onéreuses. Egalement, les vapeurs de solvant de colle doivent être traitées, pour ne pas irriter les opérateurs de production, ce qui induit des coûts supplémentaires. Enfin, le temps de polymérisation peut être long (de l'ordre de 30min), ce qui limite le rendement de production de tels procédés.

Les techniques d'assemblage basées sur une étape de collage peuvent en outre dégrader la qualité de l'ensemble de stockage obtenu pour la raison suivante. La polymérisation de la colle se fait en général à chaud (colle époxy). Les chocs thermiques et les dilatations relatives entre la colle et l'aluminium peuvent induire une déconnexion électrique du couvercle et de l'élément bobiné.

Le document US5798906 décrit un ensemble de stockage d'énergie électrique comprenant :
- une enveloppe externe comportant une zone de couplage, l'enveloppe externe étant ouverte à au moins l'une de ses extrémités,
- au moins un couvercle comportant une zone de couplage, le couvercle étant destiné à être positionné au niveau de l'extrémité ouverte de l'enveloppe externe de sorte que les zones de couplage soient en regard l'une de l'autre,
- chacune des deux zones de couplage comprend au moins une portion en relief, chaque portion en relief étant en contact avec une portion en relief de l'autre élément de telle sorte que l'enveloppe externe et le couvercle sont immobilisés l'un par rapport à l'autre au moins selon une direction, notamment axialement, par coopération de forme.

Un but de la présente invention est de proposer un procédé de fabrication d'ensemble de stockage d'énergie électrique permettant de pallier au moins l'un des inconvénients précités, notamment un procédé plus simple et moins coûteux que les procédés existants.

### RESUME DE L'INVENTION

A cet effet on propose un procédé de fabrication d'un ensemble de stockage d'énergie électrique tel qu'un condensateur ou un supercondensateur, l'ensemble de stockage comprenant :
- une enveloppe externe comportant une zone de couplage, l'enveloppe externe étant ouverte à au moins l'une de ses extrémités,
- au moins un couvercle comportant une zone de couplage, le couvercle étant destiné à être positionné au niveau de l'extrémité ouverte de l'enveloppe externe de sorte que les zones de couplage soient en regard l'une de l'autre,
- au moins l'une des zones de couplage incluant au moins une portion en relief telle qu'une saillie ou une cavité,
le procédé comprenant une étape de fermeture consistant à appliquer une force magnéto-mécanique de compression sans contact à au moins l'une des pièces constituant l'ensemble de stockage de sorte que le couvercle et l'enveloppe externe viennent au contact l'un de l'autre, notamment s'encastrent mécaniquement l'un dans l'autre, au niveau de la
ou des portions en relief afin de fermer par coopération de forme l'extrémité ouverte de l'enveloppe externe avec le couvercle.

On notera qu'on appelle « portion en relief » une portion au moins partiellement en saillie et/ou en dépression relativement à une portion de référence de l'élément. Cette portion en relief, située sur la paroi latérale de l'élément engendre une modification (augmentation et/ou diminution) des dimensions de l'élément au niveau de sa section axiale.

De façon préférentielle, l'étape de fermeture consiste à appliquer une force magnéto-mécanique sans contact à au moins l'une des pièces constituant l'ensemble de stockage - par exemple en utilisant un inducteur - de sorte que le couvercle et l'enveloppe externe viennent au contact l'un de l'autre au niveau de la ou des portions en relief afin de fermer par coopération de forme l'extrémité ouverte de l'enveloppe avec le couvercle ;

Ce procédé permet, en fonction des paramètres utilisés en cours de fabrication, de :
- sertir le couvercle et l'enveloppe externe, ou
- souder l'enveloppe externe et le couvercle, auquel cas il y a continuité des matières des deux pièces et diffusion des atomes d'une pièce dans l'autre.

Ainsi, le procédé permet notamment l'assemblage de pièces réalisées dans des matériaux électriquement conducteurs ayant des points de fusion différents, ce qui n'est pas possible avec des dispositifs de soudure traditionnels.

Les avantages du procédé selon l'invention sont les suivants :
- la durée de l'étape de fermeture est très courte, typiquement inférieure à une seconde, ce qui permet au procédé d'être adapté au grand volume de production ;
- l'échauffement des pièces constituant l'ensemble de stockage est très faible, ce qui permet d'une part de ne pas endommager le ou les éléments bobinés situés à l'intérieur de l'enveloppe externe et d'autre part laisse la possibilité de réaliser certaines étapes telles que l'imprégnation préalablement à l'étape de fermeture, ce qui permet d'éviter des étapes supplémentaires de fermeture de l'ensemble.
- lors de la mise en oeuvre de l'étape de fermeture, la détente se créant à l'interface entre le couvercle et l'enveloppe externe est telle qu'elle induit un jet de gaz - comparable à un plasma - qui décape les surfaces à assembler : il n'est donc pas nécessaire de préparer les surfaces de l'enveloppe externe et du couvercle préalablement à l'étape de fermeture ;
- les coûts associés à la mise en oeuvre du procédé restent faible, car d'une part l'outil permettant de réaliser l'étape de fermeture peut être utilisé avec des enveloppes externes et des couvercles de diamètres différents, et d'autre part les opérations de maintenance de cet outil sont limitées car l'outil ne comprend aucune partie en mouvement, ce qui limite son usure.

Des aspects préférés mais non limitatifs du procédé selon l'invention sont les suivants :
- la force magnéto-mécanique est appliquée à l'aide d'un dispositif de génération d'une impulsion magnétique, le procédé comprenant une étape de positionnement de l'enveloppe et du couvercle de sorte qu'ils soient entourés au moins partiellement par le dispositif de génération, notamment un inducteur du dispositif. De préférence, le couvercle et l'enveloppe sont positionnés de sorte que la force de compression sans contact s'applique uniquement sur le couvercle et l'enveloppe au niveau des zones de couplage ; ceci permet de limiter les risques de dégradation d'un élément bobiné contenu dans l'enveloppe par compression des parois de l'enveloppe sur celui-ci. L'inducteur comporte alors notamment une bobine agencée de sorte à entourer partiellement l'ensemble de stockage au niveau des zones de couplage du couvercle et de l'enveloppe ;
- L'impulsion est de préférence générée à une énergie comprise entre 5 et 20 kJ. On alimente notamment l'inducteur avec une tension électrique comprise entre 5 et 6 kV et un courant électrique compris :
   ∘ entre 150A et 250A pour réaliser un sertissage,
   ∘ entre 450A et 600A pour réaliser un soudage
- le procédé comprend, préalablement à l'étape de fermeture, une étape de positionnement du couvercle et de l'enveloppe. On positionne notamment un premier élément, notamment l'enveloppe, autour de l'autre élément, notamment le couvercle, de sorte que la zone de couplage du premier élément entoure la zone de couplage de l'autre élément, la portion en relief étant ménagée dans la zone de couplage de l'autre élément ;
- la ou les portions en relief sont configurées de sorte que l'élément présente au moins deux épaulements orientés dans des directions opposés. L'élément est en outre positionné dans l'inducteur de sorte que la force de compression est de direction essentiellement perpendiculaire à la normale des épaulements. Les deux épaulements ont une normale essentiellement axiale (ou essentiellement perpendiculaire au plan d'ouverture de l'enveloppe) tandis que la force de compression est dirigée essentiellement radialement. De cette façon, on peut empêcher le mouvement axial du couvercle relativement à l'enveloppe externe selon les deux sens, non seulement pour éviter que l'ensemble ne s'ouvre lorsqu'il est soumis à une pression interne au cours de la vie de l'ensemble mais également pour éviter que, lors du procédé de fabrication, l'élément capacitif ne soit endommagé sous l'effet de la force de compression appliquée au couvercle et/ou à l'enveloppe ;
- Dans un mode de réalisation préférentiel, une pluralité de portions en relief sont ménagées dans le couvercle, le couvercle comportant au moins une paroi latérale et deux parois d'extrémité, les portions en relief comprenant au moins une première cavité débouchant sur la paroi latérale et une paroi d'extrémité et au moins une deuxième cavité, débouchant sur la paroi latérale et l'autre paroi d'extrémité. La ou les premières cavités peuvent alors déboucher sur une ou des premières parties de la paroi latérale alors que la ou les deuxièmes cavités débouchent sur une ou des deuxièmes parties de la paroi latérale, les premières et deuxièmes parties de la paroi latérale étant distinctes. Autrement dit, les cavités sont disposées de façon à être en quinconce. Les cavités peuvent constituer plus de la moitié de la hauteur du couvercle. Le couvercle peut être par exemple de forme générale cylindrique, les parois d'extrémité formant alors les bases du cylindre. Il peut également être de forme parallélépipédique. Ce mode de réalisation est particulièrement avantageux car il permet de ne pas augmenter l'encombrement du couvercle (axialement ou radialement) de façon trop importante du fait de la présence de portions en relief sur celui-ci. En outre, comme les cavités débouchent chacune sur la paroi d'extrémité, un tel couvercle peut être plus facile à fabriquer, notamment par moulage. On notera également qu'un couvercle selon ce mode de réalisation ne rend pas l'assemblage du couvercle et de l'élément capacitif, généralement effectué par soudage LASER, plus complexe que dans l'état de la technique puisque certaines portions de la face d'extrémité, dépourvue de cavité, ont la même configuration que selon l'état de la technique et s'étendent jusqu'à l'extrémité de l'élément bobiné. Enfin, une telle configuration permet de mieux s'adapter aux besoins relatifs au fonctionnement de l'ensemble. En effet, on peut rendre dissymétrique la taille et le nombre des cavités situées sur les parois d'extrémité en fonction des efforts susceptibles de s'exercer sur l'ensemble. Ainsi, on peut pourvoir la face d'extrémité externe de plus de cavités que la face d'extrémité interne puisque les efforts dus à une surpression de l'ensemble au cours de sa vie sont potentiellement très importants ;
- au moins une portion en relief peut également ou alternativement comprendre :
   - un bourrelet périphérique, par exemple annulaire, et/ou
   - une pluralité de dents, et/ou
   - une gorge, telle qu'une gorge présentant les dimensions suivantes :
      ∘ une profondeur supérieure à un millimètre et préférentiellement supérieure à trois millimètres, ce qui améliore la tenue mécanique du couvercle sur l'enveloppe externe,
      ∘ une largeur inférieure à trois millimètres, préférentiellement inférieure à deux millimètres, ce qui permet de diminuer l'épaisseur du couvercle et donc l'encombrement de l'ensemble de stockage ;
      ∘ on notera qu'il est possible de parvenir à un contact entre les pièces même lorsque la gorge présente de telles dimensions du fait de la configuration particulière du matériau (hyper-plasticité) générée par une impulsion magnétique. De telles dimensions permettent également de diminuer l'encombrement du couvercle et de l'ensemble en général,
- dans un autre mode de réalisation, le premier élément est constitué par l'enveloppe et l'autre élément par le couvercle, le couvercle comprenant un collet périphérique à son extrémité destinée à être située au voisinage d'un élément capacitif logé à l'intérieur de l'enveloppe, la zone de couplage étant située au moins partiellement au niveau du collet. On peut alors découper l'élément capacitif, préalablement à l'étape de fermeture, de sorte que cet élément soit de forme complémentaire de l'extrémité du couvercle munie du collet. Le couvercle peut alors comprendre une surface oblique et l'élément capacitif peut être chanfreiné. Cette configuration permet de diminuer l'encombrement de l'ensemble ;
- le procédé comprend, préalablement à l'étape de fermeture, une étape consistant à mettre en place un joint - réalisé par exemple en matériau plastique (par exemple un polymère ou un élastomère ou un mélange de polymère et d'élastomère) ou céramique - entre les zones de couplage du couvercle et de l'enveloppe externe : ce joint permet d'assurer au moins l'une des deux fonctions suivantes :
   o étanchéité à l'interface entre le couvercle et l'enveloppe externe,
   ∘ isolation électrique du couvercle et de l'enveloppe externe, notamment lorsque l'enveloppe externe et le couvercle sont tous deux constitués dans un matériau conducteur électriquement.

L'étape de mise en place peut notamment être une étape de positionnement d'une pièce distincte du couvercle et de l'enveloppe externe ou une étape de dépôt d'un matériau tels que ceux cités ci-dessus sur l'une des pièces parmi le couvercle et l'enveloppe, pour former un joint intégré à ladite pièce.

La présence du joint est plus particulièrement nécessaire lorsque le couvercle et l'enveloppe externe sont électriquement conductrices.
- le procédé comprend, préalablement à l'étape de fermeture, une étape consistant à positionner une bague électriquement conductrice autour des zones de couplage, l'étape de fermeture consistant à appliquer une force magnéto-mécanique sans contact à la bague - par exemple en utilisant un inducteur - de sorte que le couvercle et l'enveloppe externe viennent au contact l'un de l'autre au niveau de la portion en relief afin de fermer par coopération de forme l'extrémité ouverte de l'enveloppe avec le couvercle. Ce mode de réalisation est particulièrement avantageux quand la pièce que l'on souhaite déformer à l'aide de l'impulsion magnétique est une pièce non électriquement conductrice qui ne peut donc pas être directement déformée par une force magnétique ;
- le procédé comprend, préalablement à l'étape de fermeture, une étape consistant à déposer une couche de matériau électriquement conducteur - tel qu'une peinture conductrice électriquement - sur la face périphérique extérieure d'au moins un des éléments parmi l'enveloppe et le couvercle, notamment l'élément entourant l'autre, ladite couche étant déposée au moins sur une zone opposée à la zone de couplage de cet élément. De préférence cet élément est l'enveloppe, celle-ci étant réalisée en un matériau isolant électriquement qui permet d'isoler électriquement les deux bornes de l'ensemble sans l'aide d'un joint. Alternativement, on peut se passer d'une telle étape en évitant la présence d'un joint en utilisant un matériau multicouches comprenant au moins une couche interne isolante électriquement et une autre couche conductrice électriquement ;
- l'ensemble de stockage comprend un noyau interne s'étendant longitudinalement à l'intérieur de l'élément capacitif et traversant l'ensemble de part en part, le procédé comprenant également, lors de l'étape de fermeture, une étape d'application d'une force de compression sans contact sur au moins une pièce de l'ensemble de sorte que le couvercle et/ou l'enveloppe soit déformé pour venir au contact du noyau interne afin de fermer au l'ensemble de stockage d'énergie au niveau du noyau
- le procédé comprend, préalablement à l'étape de fermeture, une étape d'imprégnation d'un élément capacitif destiné à être logé dans l'enveloppe externe ;

L'invention concerne également un ensemble de stockage d'énergie électrique comprenant :
- une enveloppe externe comportant une zone de couplage, l'enveloppe externe étant ouverte à au moins l'une de ses extrémités,
- au moins un couvercle comportant une zone de couplage, le couvercle étant destiné à être positionné au niveau de l'extrémité ouverte de l'enveloppe externe de sorte que les zones de couplage soient en regard l'une de l'autre, au moins l'une des faces de couplage comprenant une portion en relief,
- chacune des deux zones de couplages comprend au moins une portion en relief, chaque portion en relief étant en contact avec une portion en relief de l'autre élément de telle sorte que l'enveloppe externe et le couvercle sont immobilisés l'un par rapport à l'autre au moins selon une direction, notamment axialement, par coopération de forme.
En particulier, ledit ensemble de stockage d'énergie électrique est susceptible d'être obtenu par le procédé décrit ci-dessus. Il pourrait également être obtenu par un autre procédé de liaison du couvercle et de l'enveloppe externe (qui pourraient par exemple être reliés par sertissage mécanique) L'ensemble de stockage peut également ou alternativement comprendre l'une ou plusieurs des caractéristiques lui étant relatives et décrites ci-dessus.

Des aspects préférés mais non limitatifs de l'ensemble de stockage selon l'invention sont les suivants :
- l'ensemble de stockage d'énergie électrique comprend des ondulations à l'interface entre le couvercle et l'enveloppe externe ;
- l'interface entre le couvercle et l'enveloppe externe est dépourvue de traces d'outil pour réaliser un sertissage.

L'invention a également pour objet un couvercle pour un ensemble de stockage d'énergie, ledit couvercle comportant au moins une paroi latérale et deux parois d'extrémité, le couvercle comportant également une pluralité de portions en relief, ces portions en relief comprenant au moins une première cavité débouchant sur la ou au moins une des parois latérales et une paroi d'extrémité et au moins une deuxième cavité, débouchant sur la ou au moins une des parois latérales et l'autre paroi d'extrémité.

Un tel couvercle peut également comprendre l'une ou plusieurs des caractéristiques décrites ci-dessus et concernant celui-ci : par exemple, les cavités sont disposées en quinconce, et/ou s'étendent sur plus de la moitié de la hauteur de la paroi latérale du couvercle, le couvercle est réalisé en métal, etc.

### BREVE DESCRIPTION DES FIGURES

D'autres caractéristiques, buts et avantages de la présente invention ressortiront encore de la description qui suit, laquelle est purement illustrative et non limitative et doit être lue au regard des dessins annexés sur lesquels :
- la figure 1 est un schéma de principe d'un exemple d'ensemble de stockage d'énergie électrique,
- la figure 2 est une représentation schématique partielle d'un ensemble de stockage d'énergie obtenu à partir d'un procédé de sertissage de l'art antérieur,
- la figure 3 illustre schématiquement des étapes du procédé selon l'invention,
- la figure 4 illustre un exemple d'ensemble de stockage obtenu à partir d'un mode de réalisation du procédé selon l'invention,
- la figure 5 représente schématiquement un exemple de dispositif de fabrication permettant la mise en oeuvre du procédé selon l'invention,
- les figures 6, 7 et 9 illustrent des exemples d'ensembles de stockage d'énergie obtenus à partir de variantes du procédé selon l'invention,
- la figure 8 représente partiellement le dispositif de la figure 5 pour la fabrication de différents types d'ensembles de stockage ;
- la figure 10 est une représentation en perspective d'un couvercle d'un ensemble selon un autre mode de réalisation de l'invention,
- la figure 11 est une représentation en coupe d'une partie d'un ensemble assemblé avec un procédé selon l'invention à partir du couvercle de la figure 9.

### DESCRIPTION DETAILLEE DE L'INVENTION

On va maintenant décrire plus en détail le procédé et le dispositif de fabrication selon l'invention en référence aux figures. Dans ces différentes figures, les éléments équivalents du procédé et du dispositif portent les mêmes références numériques.

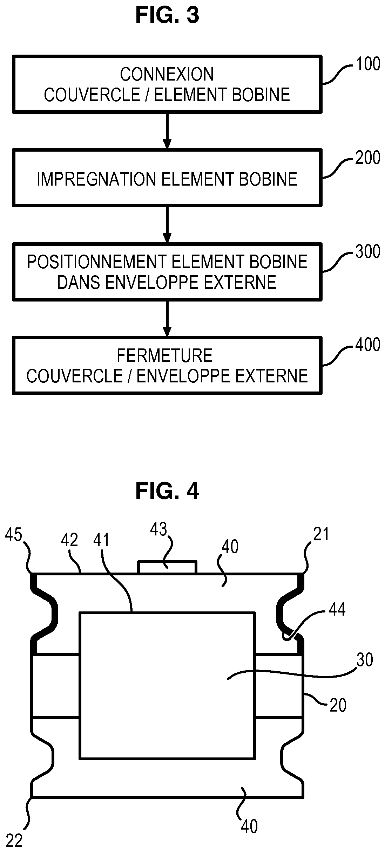

En référence à la figure 3, on a illustré un exemple de réalisation du procédé selon l'invention. Ce procédé permet de fabriquer un ensemble de stockage d'énergie électrique comprenant un élément bobiné 30, une enveloppe externe 20 ouverte à l'une de ses extrémités et un couvercle 40.

La première étape (référencée 100) consiste à connecter le couvercle 40 et l'élément bobiné 30. Le couvercle 40 est disposé sur l'élément bobiné 30 et une soudure - telle qu'une soudure laser par transparence - est réalisée à l'interface entre le couvercle 40 et l'élément bobiné 30.

La deuxième étape (référencée 200) consiste à imprégner l'élément bobiné connecté au couvercle dans un électrolyte.

La troisième étape (référencée 300) consiste à disposer l'élément bobiné connecté au couvercle dans l'enveloppe externe.

La quatrième étape (référencée 400) consiste à fermer l'extrémité ouverte de l'enveloppe externe avec le couvercle. Le procédé peut comprendre différentes variantes de l'étape de fermeture, par exemple en fonction des matériaux constituant le couvercle et l'enveloppe externe.

Ces différentes variantes seront décrites dans la suite et comprennent dans tous les cas l'application d'une force de compression sans contact à l'une des pièces constituant l'ensemble de stockage de sorte que le couvercle et l'enveloppe externe s'encastrent mécaniquement l'un dans l'autre. L'application d'une force de compression peut par exemple être obtenue en générant une impulsion magnétique.

L'homme du métier appréciera que l'étape d'imprégnation peut être mise en oeuvre préalablement à l'étape de fermeture. En effet, l'étape de fermeture est réalisée (presque) à froid de sorte que les risques d'enflammer l'électrolyte sont limités. Elle pourrait toutefois également être réalisée après l'étape de fermeture.

En référence à la figure 4, on a illustré un ensemble de stockage d'énergie fabriqué en mettant en oeuvre un mode de réalisation du procédé selon l'invention.

L'ensemble de stockage comprend une enveloppe externe 20, un élément bobiné 30 et deux couvercles 40.

L'enveloppe externe 20 est un tube ouvert à ses deux extrémités.

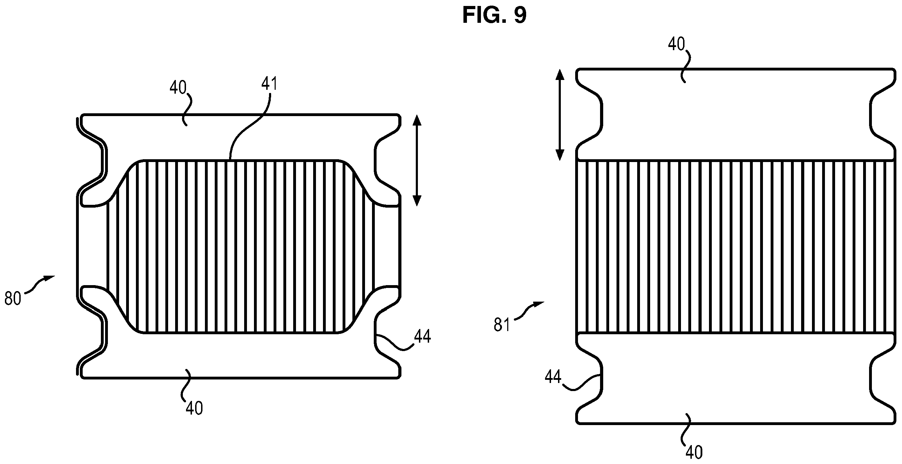

Chaque couvercle 40 présente la forme d'un disque plein. Il peut comprendre une face creusée formant un berceau 41 destiné à recevoir l'élément bobiné 30. En d'autres termes, la face d'extrémité du couvercle tournée vers l'intérieur de l'ensemble comprend un collet périphérique, ce collet délimitant le berceau pour recevoir l'élément bobiné. Le collet peut comprendre une paroi oblique. On peut alors chanfreiner l'élément bobiné afin qu'il vienne s'insérer dans le berceau. Comme illustré à la figure 9, la présence d'une face creusée 41 dans le couvercle 40 permet de limiter l'encombrement à la fois axial et radial de l'ensemble de stockage 80 par rapport à un ensemble de stockage 81 dans lequel les couvercles 40 ne comprennent pas de portion creusée.

La face 42 opposée à la face creusée 41 comprend un pion 43 pour le raccordement électrique en série ou en parallèle de deux ensembles de stockage adjacents. La face périphérique du couvercle 40 comprend une gorge 44. La présence d'une gorge permet de renforcer la liaison entre l'enveloppe externe et le couvercle lors du vieillissement et de la montée en pression de l'ensemble. La gorge est configurée essentiellement en U et les deux bras du U forment des épaulements opposés permettant l'immobilisation axiale du couvercle et de l'enveloppe à cet effet. Avantageusement, la gorge peut présenter les dimensions suivantes :
∘ une profondeur supérieure à un millimètre et préférentiellement supérieure à trois millimètres, ce qui améliore la tenue mécanique du couvercle sur l'enveloppe externe après l'étape de fermeture,
∘ une largeur inférieure à trois millimètres, préférentiellement inférieure à deux millimètres, ce qui permet de diminuer l'épaisseur du couvercle et donc l'encombrement de l'ensemble de stockage.

Les couvercles 40 et l'enveloppe externe 20 sont réalisés dans un matériau conducteur électriquement, tel que du métal.

Dans l'exemple illustré à la figure 4, les deux extrémités de l'enveloppe externe ne sont pas fermées de manières identiques. En effet, l'ensemble de stockage comprend un joint annulaire 45 entre le couvercle 40 et l'extrémité supérieure 21 de l'enveloppe externe 20 alors qu'il ne comprend pas de joint entre le couvercle 40 et l'extrémité inférieure 22 de l'enveloppe externe 20.

Le procédé mis en oeuvre pour obtenir l'ensemble de stockage illustré à la figure 4 est le suivant :
- connecter (positionner et souder) les couvercles 40 sur l'élément bobiné 30,
- imprégner l'élément bobiné 30 connecté aux couvercles 40 dans un électrolyte,
- disposer l'élément bobiné 30 connecté aux couvercles 40 dans l'enveloppe externe 20, puis
- pour l'extrémité supérieure 21 de l'enveloppe externe 20 :
   ∘ positionner le joint annulaire 45 dans la gorge 44 du couvercle 40 (ou entre l'enveloppe externe et le couvercle),
   ∘ générer une force magnétique pulsée au niveau de l'extrémité supérieure 21 de l'enveloppe externe 20 pour déformer celle-ci de sorte qu'elle épouse la forme de la face périphérique du couvercle 40 et soit encastrée mécaniquement dans celui-ci,
- pour l'extrémité inférieure 22 de l'enveloppe externe 20 :
   ∘ générer une force magnétique pulsée au niveau de l'extrémité inférieure 22 déformer celle-ci de sorte qu'elle épouse la forme de la face périphérique du couvercle 40 et soit soudée à celui-ci.

La liaison couvercle/enveloppe réalisée au niveau de l'extrémité supérieure 21 est un sertissage par impulsion magnétique alors que la liaison couvercle/enveloppe réalisée au niveau de l'extrémité inférieure 22 est une soudure par impulsion magnétique. L'homme du métier appréciera que la liaison couvercle/enveloppe réalisée au niveau de l'extrémité inférieure 22 pourrait être un sertissage par impulsion magnétique, même sans présence de joint. En effet, l'obtention d'une liaison de type soudage ou sertissage dépend des énergies utilisées pour effectuer la liaison. On notera que seule l'enveloppe est déformée car, la force étant appliquée sur tout le tour de l'ensemble et le couvercle étant une pièce massive, il ne subit pas de déformation substantielle, au contraire de l'enveloppe qui possède un vide central et peut donc se contracter au niveau de ce vide.

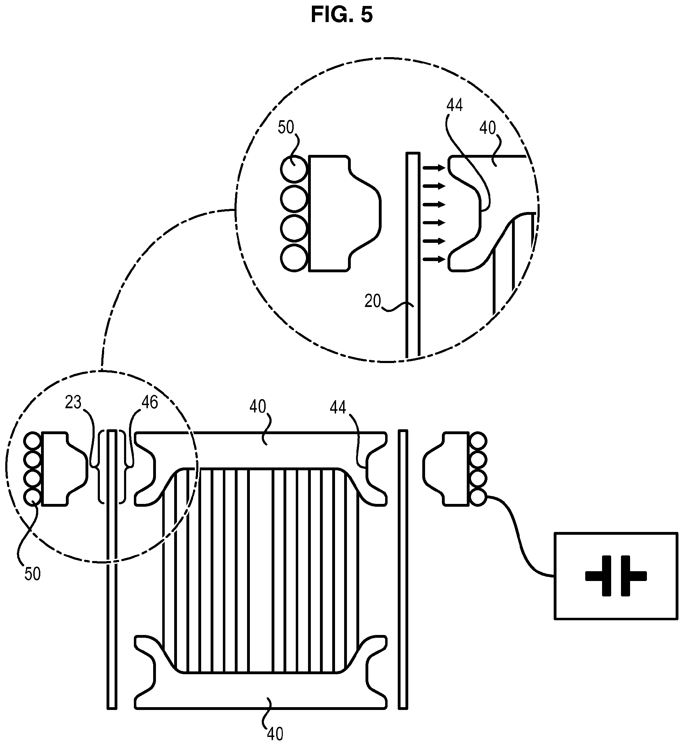

En référence à la figure 5, on a illustré un mode de réalisation d'un dispositif pour la mise en oeuvre du procédé décrit précédemment. Le dispositif comprend un compresseur pour appliquer une force de compression sans contact à l'une des pièces constituant l'ensemble de stockage d'énergie. Ceci permet un encastrement mécanique du couvercle et de l'enveloppe externe pour fermer l'ensemble de stockage par coopération de forme entre l'enveloppe externe et le couvercle.

Dans le mode de réalisation illustré à la figure 5, le compresseur consiste en un inducteur - tel qu'une bobine - apte à appliquer une force magnéto-mécanique sans contact. L'inducteur est par exemple une bobine.

Le dispositif comprend un générateur (non représenté) relié à la bobine 50. L'ensemble de stockage à fermer est destiné à être mis en place au centre de la bobine 50 de sorte que les enroulements de la bobine l'entourent partiellement.

On va maintenant décrire le principe de fonctionnement du dispositif en référence à un ensemble de stockage comprenant :
- une enveloppe externe 20 comportant une face de couplage 23, l'enveloppe externe 20 étant ouverte à l'une de ses extrémités,
- un couvercle 40 comportant une face de couplage 46 incluant une cavité 44, le couvercle 40 étant destiné à être positionné au niveau de l'extrémité ouverte de l'enveloppe externe.

Pour réaliser la fermeture de l'ensemble de stockage, les faces de couplage 23, 46 sont mises en regard l'une de l'autre.

Le couvercle 40 et l'enveloppe externe 20 sont provisoirement fixés l'un par rapport à l'autre. Cette fixation peut être mise en oeuvre à l'aide de divers moyens de fixation provisoire, comme par exemple le joint décrit en référence à la figure 4 et qui permet une adhérence suffisante du couvercle 40 sur l'enveloppe externe 20.

Le couvercle 40 et l'enveloppe externe 20 sont positionnés au centre de la bobine 50. Avantageusement seules les faces de couplage 23, 46 en regard peuvent être placées au centre de la bobine. En d'autres termes, on peut prévoir de ne disposer dans la bobine que la région de l'enveloppe dans laquelle sont superposées les surfaces périphériques de l'enveloppe externe et du couvercle. Cela évite en effet que l'enveloppe externe 20 ne soit compressée contre l'élément bobiné 30, endommageant éventuellement celui-ci.

Une fois l'ensemble de stockage positionné, le générateur (chargé) décharge une grande énergie sur un temps très court dans la bobine 50. La bobine est orientée pour que la force ait une direction essentiellement radiale.

La face de couplage 23 de l'enveloppe externe 20 est alors projetée à grande vitesse en direction de la face de couplage 46 du couvercle 40. La face de couplage 23 de l'enveloppe externe 20 se conforme à la forme de la cavité 44 agencée sur la face de couplage 46 du couvercle 40.

Le dispositif décrit en référence à la figure 5 permet de projeter la pièce externe sur la pièce interne à une vitesse de 150 à 600 m/s.

Les informations générales de fonctionnement du dispositif de génération de l'impulsion sont les suivantes :
- énergie maximum : 25kJ,
- fréquence : 15 kHz,
- Capacitance : 300 à 800µF,
- Tension : 5 - 6kV.

Le dispositif de génération de l'impulsion magnéto-mécanique peut être utilisé pour sertir ou souder en fonction des paramètres d'utilisation de celui-ci :
- puissance :
   ∘ sertissage : 8 kJ,
   ∘ soudage : 15 à 18 kJ,
- Ampérage :
   ∘ Sertissage : 150A-250A,
   ∘ Soudage : 450 à 600A.

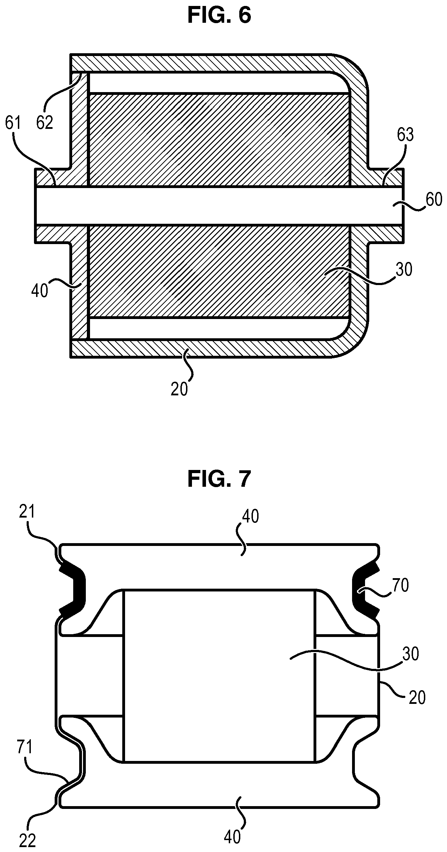

Ce dispositif peut être utilisé pour assembler différentes pièces de l'ensemble de stockage d'énergie électrique comme illustré à la figure 6. Cet ensemble de stockage d'énergie comprend :
- une enveloppe externe tubulaire 20 ouverte à l'une de ses extrémités,
- un couvercle 30 en forme de disque destiné à être disposé au niveau de l'extrémité ouverte, et
- un noyau 60 en forme de tige destiné à être positionné coaxialement à l'axe de symétrie de l'enveloppe externe tubulaire 20.

Le couvercle 40, le noyau 60 et l'enveloppe externe 20 peuvent être constituées dans un matériau conducteur tel que du métal. Dans ce cas, le noyau 60 est isolé du couvercle 40 et de l'enveloppe externe 20 par l'intermédiaire d'un isolant électrique pour éviter les risques de court-circuit. En variante, le noyau peut être constitué dans un matériau isolant électriquement tel que du plastique. L'enveloppe externe 20 et le couvercle 40 peuvent comporter chacun un collet pour recevoir le noyau, afin notamment de permettre le soudage de l'élément bobiné 30 respectivement au couvercle 40 et au fond de l'enveloppe externe tubulaire 20.

Le dispositif et le procédé de fabrication selon l'invention peuvent être utilisés pour réaliser :
- un assemblage, notamment une soudure 61 noyau/couvercle.
- un assemblage, notamment une soudure 62 couvercle/enveloppe externe, et
- un assemblage, notamment une soudure 63 noyau/enveloppe externe.

En référence à la figure 7, on a illustré un autre type d'ensemble de stockage obtenu en mettant en oeuvre une autre variante de réalisation du procédé selon l'invention. Cet ensemble de stockage comprend :
- un élément bobiné 30,
- une enveloppe externe tubulaire 20 en matériau isolant électriquement tel qu'un plastique, l'enveloppe incluant deux faces de couplage au niveau de ses extrémités ouvertes supérieure 21 et inférieure 22,
- deux couvercles 40 en matériau conducteur électriquement, chaque couvercle comportant une face de couplage présentant une gorge annulaire 44,
- une bague de sertissage 70 (ou un fil de sertissage) au niveau de l'extrémité supérieure 21 de l'enveloppe externe 20,
- une couche 71 de matériau électriquement conducteur au niveau de l'extrémité inférieure 22 de l'enveloppe externe.

La bague de sertissage 70 assure le transfert de l'énergie magnétique générée lors de l'étape de fermeture en énergie cinétique de déplacement afin d'induire un impact entre l'enveloppe externe et le couvercle. La déformation de la bague conductrice entraîne alors la déformation de l'enveloppe isolante sur lequel la force magnétique n'agit pas.

Le procédé mis en oeuvre pour obtenir l'ensemble de stockage illustré à la figure 7 est le suivant :
- connecter (positionner et souder) les couvercles 40 sur l'élément bobiné 30,
- imprégner l'élément bobiné 30 connecté aux couvercles 40 dans un électrolyte,
- disposer l'élément bobiné 30 connecté aux couvercles 40 dans l'enveloppe externe 20, puis
- pour l'extrémité supérieure 21 de l'enveloppe externe 20 :
   ∘ positionner la bague de sertissage autour de la face de couplage de l'enveloppe externe,
   ∘ générer une force magnétique pulsée au niveau de l'extrémité supérieure 21 de l'enveloppe externe 20 pour projeter la bague de serrage contre l'enveloppe externe afin de l'encastrer mécaniquement dans le couvercle 40,
- pour l'extrémité inférieure 22 de l'enveloppe externe 20 :
   ∘ déposer une couche de matériau électriquement conducteur au niveau de la face de contact de l'enveloppe externe,
   ∘ générer une impulsion électromagnétique au niveau de l'extrémité inférieure 21 de sorte à appliquer une force magnéto-mécanique à l'enveloppe externe 20 au niveau de la couche de matériau électriquement conducteur permettant d'obtenir un contact intime entre le couvercle et l'enveloppe externe par déformation de celle-ci.

Le procédé peut également être mis en oeuvre sur d'autres types d'ensembles de stockage.

Par exemple, le procédé peut être mis en oeuvre pour réaliser un ensemble de stockage non cylindrique, comme un ensemble de stockage de section transversale hexagonale, triangulaire, octogonale, rectangulaire, etc.

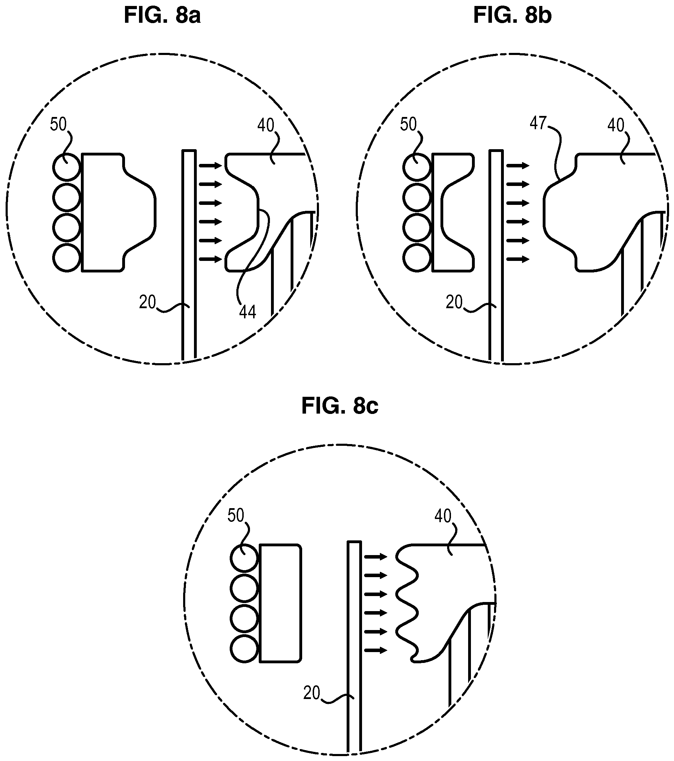

Egalement, le couvercle peut présenter un bourrelet annulaire 47 (comme illustré à la figure 8b) plutôt qu'une gorge annulaire 44 (comme illustré à la figure 8a) sur sa face périphérique formant face de couplage. En variante, la face périphérique du couvercle peut comprendre une forme dentelée (comme illustré à la figure 8c).

Par ailleurs, le couvercle peut comprendre un bord tombé 48 à sa périphérie comme illustré à la figure 1. Le bord tombé périphérique 48 est alors prévu pour entourer l'extrémité de l'enveloppe externe lorsque le couvercle 40 coiffe celle-ci. Dans ce cas, c'est généralement l'enveloppe externe qui peut comprendre une portion en relief telle qu'une saillie ou une cavité.

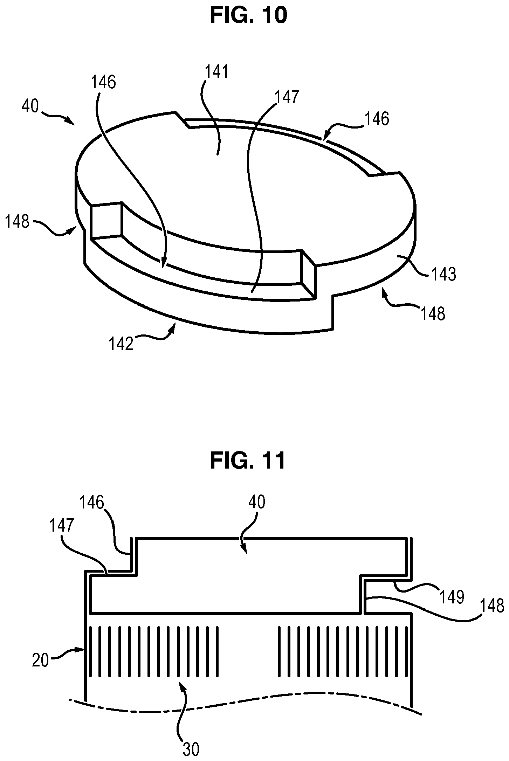

Le couvercle 40 peut également ne pas présenter une section constante. Par exemple, le couvercle peut être un cylindre comprenant à sa périphérie une ou plusieurs portions évidées formant épaulement ; ces portions évidées peuvent être décalées angulairement et s'étendre alternativement sur l'une ou l'autre des arrêtes du couvercle. Il peut notamment, comme cela est représenté à la figure 10, présenter une forme générale cylindrique avec deux parois d'extrémité 141, 142 et une paroi latérale 143. Ce couvercle comprend, une première série de cavités 146 débouchant à la fois sur la paroi latérale et sur la paroi d'extrémité 141 et une deuxième série de cavités 148 débouchant à la fois sur la paroi latérale 143 et sur la paroi d'extrémité 142. Comme on le voit sur la figure 10, ces cavités ne s'étendent pas sur tout le pourtour du couvercle mais sont en quinconce, à savoir que les cavités de la première série s'étendent dans une première portion de la paroi latérale alors que les cavités de la deuxième série s'étendant dans une deuxième portion de la paroi latérale distincte de la première série. Ainsi, la paroi de fond 147 de la première série de cavités 46 forme un premier épaulement axial alors que la paroi de fond 149 de la deuxième série de cavités 48 forme un deuxième épaulement axial opposé, ces épaulements permettant, comme on le voit sur la figure 11, d'immobiliser l'enveloppe externe et le couvercle l'un par rapport à l'autre au moins axialement, lorsque l'ensemble a été soumis au procédé selon l'invention décrit plus haut et que l'enveloppe 20 a été déformée par l'impulsion magnétique pour épouser la forme du couvercle. Ce mode de réalisation est avantageux car il diminue encombrement du couvercle tout en simplifiant sa fabrication.

La mise en oeuvre du procédé selon l'invention permet la fabrication d'ensembles de stockage présentant des caractéristiques techniques particulières ne se retrouvant pas dans les ensembles de stockage obtenus à partir de procédés de fabrication antérieurs basés sur une soudure, un sertissage ou encore un collage. Notamment, l'ensemble de stockage obtenu en mettant en oeuvre le procédé et le dispositif selon l'invention ne présente pas de traces de contact avec un outil ayant servi à effectuer un sertissage mécanique. En effet, le sertissage par impulsion magnétique s'effectue sans outils (contrairement au roulage) et sans changement d'état des métaux (contrairement à la soudure et au brasage).

Par ailleurs, une analyse fine par métallographie d'un ensemble de stockage obtenu en mettant en oeuvre le procédé et le dispositif selon l'invention permet d'observer de petites vaguelettes inhérentes à la propagation d'une onde de choc à l'interface de la soudure ou du sertissage.

Par ailleurs, il n'y a pas de modification de l'orientation des grains au niveau de l'interface de soudure ou de sertissage, contrairement aux procédés de l'art antérieur mettant en oeuvre un sertissage mécanique.

Le procédé et le dispositif de fabrication d'ensemble de stockage décrits précédemment présentent de nombreux avantages.

Ils permettent de diminuer l'encombrement des ensembles de stockage ainsi obtenus. En effet, il n'est plus nécessaire de coiffer l'enveloppe externe avec un couvercle comprenant un bord tombé pour garantir une bonne tenue mécanique. Grâce au procédé et au dispositif selon l'invention, il est possible d'utiliser un couvercle de diamètre inférieur à l'enveloppe externe de sorte que la paroi latérale de celle-ci entoure la face périphérique du couvercle.

Le procédé et le dispositif selon l'invention permettent également de mieux maitriser la compression des pièces isolantes intermédiaires susceptibles d'être utilisées. En effet, la force de compression appliquée sur l'enveloppe externe pour en induire la déformation se répartit de manière homogène et identique en tout point de la périphérie. Ainsi, lorsqu'un joint est placé entre l'enveloppe externe et le couvercle, sa compression est mieux maîtrisée et l'étanchéité assurée est meilleure.

Ils permettent en outre d'améliorer l'étanchéité des ensembles de stockage ainsi obtenus. En effet, la génération de l'impulsion magnétique permet de faire un collage atomique de l'enveloppe externe et du couvercle qui est bien meilleur que les collages chimiques classiques (époxy...). Avantageusement, ce collage atomique peut se faire sur des matériaux hétérogènes comme le plastique/aluminium ou céramique/aluminium ou élastomère /aluminium. Le procédé est donc plus flexible

L'homme du métier aura compris que de nombreuses modifications peuvent être apportées au dispositif et au procédé décrit ci-dessus sans sortir matériellement des nouveaux enseignements présentés ici. Il est donc bien évident que les exemples qui viennent d'être donnés ne sont que des illustrations particulières en aucun cas limitatives. Par conséquent, toutes les modifications de ce type sont destinées à être incorporées à l'intérieur de la portée des revendications jointes.

## Revendications

1. Procédé de fabrication d'un ensemble de stockage d'énergie électrique comprenant au moins :
- une enveloppe externe (20) comportant une zone de couplage (23), l'enveloppe externe étant ouverte à au moins l'une (21) de ses extrémités,
- au moins un couvercle (40) comportant une zone de couplage (46), le couvercle étant destiné à être positionné au niveau de l'extrémité ouverte de l'enveloppe externe de sorte que les zones de couplage (23, 46) soient en regard l'une de l'autre,
- au moins l'une (46) des zones de couplage incluant au moins une portion en relief (44, 47 ; 146, 148),
le procédé étant **caractérisé en ce qu'**il comprend une étape de fermeture (400) consistant à appliquer une force magnéto-mécanique de compression sans contact à au moins l'une des pièces (20, 40) de l'ensemble de stockage de sorte que le couvercle (40) et l'enveloppe externe (20) viennent au contact l'un de l'autre au niveau de la ou des portions en relief afin de fermer par coopération de forme l'extrémité ouverte de l'enveloppe externe avec le couvercle.

2. Procédé selon la revendication 1, dans lequel l'étape de fermeture consiste à appliquer une force magnéto-mécanique sans contact à au moins l'une des pièces constituant l'ensemble de stockage de sorte que le couvercle et l'enveloppe externe viennent au contact l'un de l'autre au niveau de la portion en relief afin de fermer par coopération de forme l'extrémité ouverte de l'enveloppe avec le couvercle, ladite pièce étant réalisée au moins partiellement en un matériau électriquement conducteur.

3. Procédé selon la revendication précédente, dans lequel la force magnéto-mécanique est appliquée à l'aide d'un dispositif (50) de génération d'une impulsion magnétique, le procédé comprenant une étape de positionnement (300) de l'enveloppe (20) et du couvercle (40) de sorte qu'ils soient entourés au moins partiellement par le dispositif de génération, notamment un inducteur du dispositif, l'impulsion étant de préférence générée à une énergie comprise entre 5 et 20 kJ.

4. Procédé selon l'une quelconque des revendications précédentes, lequel comprend, préalablement à l'étape de fermeture, une étape de positionnement (300) du couvercle et de l'enveloppe, le couvercle (40) et l'enveloppe (20) étant positionnés dans le dispositif de génération, de sorte que la force de compression sans contact s'applique uniquement sur le couvercle et l'enveloppe au niveau des zones de couplage (23, 46).

5. Procédé selon l'une quelconque des revendications précédentes, dans lequel, avant l'étape de fermeture, on positionne un premier élément, notamment l'enveloppe externe (20), autour de l'autre élément, notamment le couvercle (40), de sorte que la zone de couplage (23) du premier élément entoure la zone de couplage (46) de l'autre élément, la portion en relief étant ménagée dans la zone de couplage de l'autre élément.

6. Procédé selon l'une quelconque des revendications précédentes, dans lequel la ou les portions en relief sont configurées de sorte que l'élément présente au moins deux épaulements (147, 149) orientés dans des directions opposés et est positionné dans l'inducteur de sorte que la force de compression est de direction essentiellement perpendiculaire à la normale des épaulements.

7. Procédé selon la revendication précédente, dans lequel une pluralité de portions en relief sont ménagées dans le couvercle, le couvercle comportant au moins une paroi latérale (143) et deux parois d'extrémité (141, 142), les portions en relief comprenant au moins une première cavité (146) débouchant sur la ou au moins une des parois latérales et une paroi d'extrémité et au moins une deuxième cavité (148), débouchant sur la ou au moins une des parois latérales et l'autre paroi d'extrémité.

8. Procédé selon la revendication précédente, dans lequel la ou les premières cavités (146) débouchent sur une ou des premières parties de la ou au moins une des parois latérales (143) et la ou les deuxièmes cavités (148) débouchent sur une ou des deuxièmes parties de la ou au moins une des parois latérales, les premières et deuxièmes parties de la ou au moins une des parois latérales étant distinctes.

9. Procédé selon l'une quelconque des revendications précédentes, dans lequel au moins une portion en relief comprend :
- un bourrelet périphérique (47), et/ou
- une pluralité de dents, et/ou
- une gorge (44), ayant de préférence une profondeur supérieure à 1 mm, notamment à 3 mm.

10. Procédé selon l'une quelconque des revendications précédentes, lequel comprend, préalablement à l'étape de fermeture, une étape consistant à positionner un joint (45) entre les zones de couplage du couvercle et de l'enveloppe externe.

11. Procédé selon l'une quelconque des revendications précédentes, lequel comprend, préalablement à l'étape de fermeture, une étape consistant à positionner une bague électriquement conductrice autour des zones de couplage, l'étape de fermeture consistant à appliquer une force magnéto-mécanique sans contact à la bague de sorte que le couvercle et l'enveloppe externe s'encastrent mécaniquement l'un dans l'autre au niveau de la portion en relief afin de fermer par coopération de forme l'extrémité ouverte de l'enveloppe avec le couvercle.

12. Procédé selon l'une quelconque des revendications précédentes, lequel comprend, préalablement à l'étape de fermeture, une étape consistant à déposer une couche de matériau électriquement conducteur (71) sur la face périphérique extérieure d'au moins un des éléments parmi l'enveloppe externe et le couvercle, ladite couche étant déposée au moins sur une zone de couplage de cette pièce.

13. Procédé selon l'une quelconque des revendications précédentes, lequel comprend, préalablement à l'étape de fermeture, une étape d'imprégnation (200) d'un élément capacitif (30) destiné à être logé dans l'enveloppe externe.

14. Procédé selon l'une quelconque des revendications précédentes, dans lequel l'ensemble de stockage comprend un noyau interne (60) s'étendant longitudinalement à l'intérieur de l'élément capacitif et traversant l'ensemble de part en part, le procédé comprenant également, lors de l'étape de fermeture, une étape d'application d'une force de compression sans contact sur au moins une pièce de l'ensemble de sorte que le couvercle (40) et/ou l'enveloppe (20) soit déformé pour venir au contact du noyau interne afin de fermer au l'ensemble de stockage d'énergie au niveau du noyau.

## Patentansprüche

1. Verfahren zur Herstellung einer Anordnung für die Speicherung elektrischer Energie, umfassend mindestens:
- eine äußere Hülle (20), aufweisend einen Kopplungsbereich (23), wobei die äußere Hülle an mindestens einem (21) ihrer Enden offen ist,
- mindestens eine Abdeckung (40), aufweisend einen Kopplungsbereich (46), wobei die Abdeckung bestimmt ist, im Bereich des offenen Endes der äußeren Hülle derart positioniert zu sein, dass die Kopplungsbereiche (23, 46) einander zugewandt sind,
- wobei mindestens einer (46) der Kopplungsbereiche mindestens einen Reliefabschnitt (44, 47; 146, 148) umfasst,
wobei das Verfahren **dadurch gekennzeichnet ist, dass** es einen Schritt des Verschließens (400) umfasst, der darin besteht, eine magnetmechanische Kompressionskraft ohne Kontakt auf mindestens eines der Teile (20, 40) der Speicheranordnung derart auszuüben, dass die Abdeckung (40) und die äußere Hülle (20) im Bereich des oder der Reliefabschnitte miteinander in Kontakt kommen, um das offene Ende der äußeren Hülle mit der Abdeckung durch Formkooperation zu verschließen.

2. Verfahren nach Anspruch 1, wobei der Schritt des Verschließens darin besteht, eine magnetmechanische Kraft ohne Kontakt derart auf mindestens eines der Teile anzuwenden, die die Speicheranordnung bilden, dass die Abdeckung und die äußere Hülle im Bereich des Reliefabschnitts miteinander in Kontakt kommen, um durch Formkooperation das offene Ende der äußeren Hülle mit der Abdeckung zu verschließen, wobei das Teil mindestens teilweise aus einem elektrisch leitenden Material hergestellt ist.

3. Verfahren nach vorangehendem Anspruch, wobei die magnetmechanische Kraft mit Hilfe einer Vorrichtung (50) zur Erzeugung eines magnetischen Impulses angewendet wird, wobei das Verfahren einen Positionierungsschritt (300) der Hülle (20) und der Abdeckung (40) derart umfasst, dass sie mindestens teilweise von der Erzeugungsvorrichtung, insbesondere einem Induktor der Vorrichtung, umgeben sind, wobei der Impuls vorzugsweise mit einer Energie zwischen 5 und 20 kJ inklusive erzeugt wird.

4. Verfahren nach einen der vorangehenden Ansprüche, welches vor dem Schritt des Verschließens einen Positionierungsschritt (300) der Abdeckung und der Hülle umfasst, wobei die Abdeckung (40) und die Hülle (20) derart in der Erzeugungsvorrichtung positioniert werden, dass die Kompressionskraft ohne Kontakt auf die Abdeckung und die Hülle nur im Bereich der Kopplungsbereiche (23, 46) angewendet wird.

5. Verfahren nach einen der vorangehenden Ansprüche, wobei vor dem Schritt des Verschließens ein erstes Element, insbesondere die äußere Hülle (20), um das andere Element, insbesondere die Abdeckung (40), derart positioniert wird, dass der Kopplungsbereich (23) des ersten Elements den Kopplungsbereich (46) des anderen Elements umgibt, wobei der Reliefabschnitt im Kopplungsbereich des anderen Elements ausgebildet ist.

6. Verfahren nach einen der vorangehenden Ansprüche, wobei der oder die Reliefabschnitte derart konfiguriert sind, dass das Element mindestens zwei Absätze (147, 149) aufweist, die in entgegengesetzte Richtungen gerichtet sind, und derart im Induktor positioniert ist, dass die Kompressionskraft im Wesentlichen senkrecht zur Normalen der Absätze gerichtet ist.

7. Verfahren nach vorangehendem Anspruch, wobei eine Vielzahl von Reliefabschnitten in der Abdeckung ausgebildet ist, wobei die Abdeckung mindestens eine Seitenwand (143) und zwei Endwände (141, 142) aufweist, wobei die Reliefabschnitte mindestens einen ersten Hohlraum (146), der auf die oder mindestens eine der Seitenwände ausmündet, und eine Endwand und mindestens einen zweiten Hohlraum (148), der auf die oder mindestens eine der Seitenwände und die andere Endwand ausmündet, umfasst.

8. Verfahren nach vorangehendem Anspruch, wobei der oder die ersten Hohlräume (146) auf einem ersten oder ersten Teilen der oder mindestens einer der Seitenwände (143) ausmünden und der oder die zweiten Hohlräume (148) auf einen zweiten oder zweiten Teilen der oder mindestens einer der Seitenwände ausmünden, wobei die ersten und zweiten Teile der oder mindestens einer der Seitenwände unterschiedlich sind.

9. Verfahren nach einen der vorangehenden Ansprüche, wobei mindestens ein Reliefabschnitt umfasst:
- eine periphere Wulst (47), und/oder
- eine Vielzahl von Zähnen, und/oder
- eine Nut (44) mit vorzugsweise einer Tiefe über 1 mm, insbesondere 3 mm.

10. Verfahren nach einen der vorangehenden Ansprüche, das vor dem Schritt des Verschließens einen Schritt umfasst, der darin besteht, eine Dichtung (45) zwischen den Kopplungsbereichen der Abdeckung und der äußeren Hülle zu positionieren.

11. Verfahren nach einen der vorangehenden Ansprüche, das vor dem Schritt des Verschließens einen Schritt umfasst, der darin besteht einen elektrisch leitenden Ring um Kopplungsbereiche zu positionieren, wobei der Schritt des Verschließens darin besteht, eine magnetmechanische Kraft ohne Kontakt auf den Ring derart anzuwenden, dass die Abdeckung und die äußere Hülle im Bereich des Reliefabschnitts mechanisch ineinander rasten, um das offene Ende der äußeren Hülle mit der Abdeckung durch Formkooperation zu verschließen.

12. Verfahren nach einen der vorangehenden Ansprüche, das vor dem Schritt des Verschließens einen Schritt umfasst, der darin besteht, eine Schicht elektrisch leitenden Materials (71) auf die äußere periphere Fläche von mindestens einem der Elemente der äußeren Hülle und der Abdeckung aufzubringen, wobei die Schicht auf mindestens einen Kopplungsbereich dieses Teils aufgetragen wird.

13. Verfahren nach einen der vorangehenden Ansprüche, das vor dem Schritt des Verschließens einen Imprägnierschritt (200) eines kapazitiven Elements (30) umfasst, das bestimmt ist, in der äußeren Hülle untergebracht zu sein.

14. Verfahren nach einen der vorangehenden Ansprüche, wobei die Speicheranordnung einen inneren Kern (60) umfasst, der sich längs im Innern des kapazitiven Elements erstreckt und die Anordnung von einer Seite zur anderen durchquert, wobei das Verfahren ebenfalls beim Schritt des Verschließens einen Anwendungsschritt einer Kompressionskraft ohne Kontakt auf mindestens ein Teil der Anordnung derart umfasst, dass die Abdeckung (40) und/oder die Hülle (20) verformt wird/werden, um mit dem inneren Kern in Kontakt zu treten, um die Energiespeicheranordnung im Bereich des Kerns zu verschließen.

## Claims

1. A method for manufacturing an electrical energy-storage unit comprising at least:
- an external envelope (20) comprising a coupling zone (23), the external envelope being open at at least one (21) of its ends,
- at least one cover (40) comprising a coupling zone (46), the cover being intended to be positioned at the level of the open end of the external envelope such that the coupling zones (23, 46) are opposite each other,
- at least one of the coupling zones (46) including at least one relief portion (44, 47; 146, 148),
the method being **characterized in that** it comprises a closing step (400) consisting of applying a contactless compression magneto-mechanical force to at least one of the pieces (20, 40) of the storage unit such that the cover (40) and the external envelope (20) come into contact with each other at the level of the portion or portions in relief to close the open end of the external envelope with the cover by cooperation of form.

2. The method according to claim 1, wherein the closing step consists of applying a contactless magneto-mechanical force to at least one of the pieces constituting the storage unit such that the cover and the external envelope come into contact with each other at the level of the relief portion to close the open end of the envelope with the cover by cooperation of form, said piece being made at least partially of electrically conductive material.

3. The method according to the preceding claim, wherein the magneto-mechanical force is applied by means of a device (50) for generation of a magnetic pulse, the method comprising a positioning step (300) of the envelope (20) and of the cover (40) such that they are enclosed at least partially by the generation device, especially an inductor of the device, the pulse being preferably generated at an energy of between 5 and 20 kJ.

4. The method according to any one of the preceding claims, which comprises, prior to the closing step, a positioning step (300) of the cover and of the envelope, the cover (40) and the envelope (20) being positioned in the generation device, such that the contactless compression force is applied only to the cover and the envelope at the level of the coupling zones (23, 46).

5. The method according to any one of the preceding claims, wherein, prior to the closing step, a first element, especially the external envelope (20), is positioned around the other element, especially the cover (40), such that the coupling zone (23) of the first element encloses the coupling zone (46) of the other element, the relief portion being arranged in the coupling zone of the other element.

6. The method according to any one of the preceding claims, wherein the portion or portions in relief are configured such that the element has at least two shoulders (147, 149) oriented in opposite directions and is positioned in the inductor such that the compression force is in a direction essentially perpendicular to the normal of the shoulders.

7. The method according to the preceding claim, wherein a plurality of portions in relief is arranged in the cover, the cover comprising at least one lateral wall (143) and two end walls (141, 142), the portions in relief comprising at least one first cavity (146) opening on the or at least one of the lateral walls and an end wall and at least one second cavity (148), opening on the or at least one of the lateral walls and the other end wall.

8. The method according to the preceding claim, wherein the or the first cavities (146) open on a first part or first parts of the or at least one of the lateral walls (143) and the second cavity or second cavities (148) open on a second part or second parts of the or at least one of the lateral walls, the first and second parts of the or at least one of the lateral walls being separate.

9. The method according to any one of the preceding claims, wherein at least one relief portion comprises:
- a bead peripheral (47), and/or
- a plurality of teeth, and/or
- a groove (44), having preferably a depth greater than 1 mm, especially 3 mm.

10. The method according to any one of the preceding claims, which comprises, prior to the closing step, a step consisting of positioning a joint (45) between the coupling zones of the cover and the external envelope.

11. The method according to any one of the preceding claims, which comprises, prior to the closing step, a step consisting of positioning an electrically conductive ring around the coupling zones, the closing step consisting of applying a contactless magneto-mechanical force to the ring, such that the cover and the external envelope fit mechanically into each other, at the level of the relief portion, to close the open end of the envelope with the cover by cooperation of form.

12. The method according to any one of the preceding claims, which comprises, prior to the closing step, a step consisting of depositing a layer of electrically conductive material (71) to the external peripheral face of at least one of the elements of the external envelope and the cover, said layer being deposited at least on a coupling zone of this piece.

13. The method according to any one of the preceding claims, which comprises, prior to the closing step, an impregnation step (200) of a capacitive element (30) intended to be housed in the external envelope.

14. The method according to any one of the preceding claims, wherein the storage unit comprises an internal core (60) extending longitudinally inside the capacitive element and passing through the unit from side to side, the method also comprising, during the closing step, an application step of a contactless compression force to at least one piece of the unit, such that the cover (40) and/or the envelope (20) is deformed to come into contact with the internal core to close the energy-storage unit at the level of the core.
